# EUROPÄISCHE PATENTSCHRIFT

(11) **EP 3 870 724 B1**
(45) Veröffentlichungstag und Bekanntmachung des Hinweises auf die Patenterteilung: **23.11.2022**
(21) Anmeldenummer: 19780171.5
(22) Anmeldetag: 19.09.2019
(51) Int. Cl.: C21C 5/56, F27B 3/18, F27D 13/00, C21C 5/52

(54) **ANLAGE ZUM EINSCHMELZEN VON SCHROTT UND VERFAHREN ZUM BETREIBEN DER ANLAGE**
SYSTEM FOR MELTING DOWN SCRAP AND METHOD FOR OPERATING THE SYSTEM
INSTALLATION SERVANT À FAIRE FONDRE DE LA FERRAILLE ET PROCÉDÉ SERVANT À FAIRE FONCTIONNER L'INSTALLATION

(30) Priorität: 22.10.2018 DE 102018126161
(43) Veröffentlichungstag der Anmeldung: 01.09.2021
(73) Patentinhaber: INTECO melting and casting technologies GmbH, 8600 Bruck a.d. Mur (AT)
(72) Erfinder: HOLZGRUBER, Harald, 8600 Bruck a. d. Mur (AT); MANAZZONE, Michele, 33040 Pradamano / Udine (IT); VALOPPI, Antonello, 33100 Udine (IT); HARTNER, Markus, 8611 St. Katharein / Laming (AT); KRISTL, Roland, 8793 Trofaiach (AT)
(74) Vertreter: Patent- und Rechtsanwälte Behrmann Wagner PartG mbB
(86) Internationale Anmeldenummer: PCT/EP2019/075237
(87) Internationale Veröffentlichungsnummer: WO 2020/083579

(56) Entgegenhaltungen:
- EP-A2- 2 270 240
- CN-A- 102 181 601
- CN-U- 204 100 774

## Beschreibung

### Stand der Technik

Die Erfindung betrifft ein Verfahren zum Einschmelzen von Schrott mit den Merkmalen des Oberbegriffs des Anspruchs 1. Ferner betrifft die Erfindung feine Anlage mit den Merkmalen des unabhängigen Vorrichtungsanspruchs 3.

Anlagen zum Einschmelzen von Schrott sind aus CN 102 181 601 A, EP 2 270 240 A2 und CN 204 100 774 U sowie aus der nachveröffentlichten DE 10 2017 124 108 A1 der Anmelderin bekannt. Die bekannte Anlage ist mit Blick auf die optimale Erwärmung des Schrotts mittels der erwärmten Abgase des Schmelzofens optimiert und weist im Zuführbereich zum Schmelzofen eine aus einer Vielzahl von Lamellenelementen bestehende Fördereinrichtung auf, die innerhalb eines zumindest im Wesentlichen einen geschlossenen Querschnitt aufweisenden Schrottvorwärmgehäuses angeordnet oder von einem Schrottvorwärmgehäuse auf einer der Förderstrecke für den Schrott zugewandten Seite überdeckt ist. Durch eine gesteuerte Vorwärts- bzw. Rückwärtsbewegung der Lamellen wird die Förderung des Schrotts auf der Fördereinrichtung in Richtung des Schmelzofens bewirkt. Dabei wird der Schrott entlang der gesamten Förderstrecke auf der Fördereinrichtung in Richtung zum Schmelzofen gefördert.

Eine grundsätzliche Problematik bei der Förderung von Schrott in einen Schmelzofen mittels einer Fördereinrichtung ist es, dass einerseits der Schrott zum Verhaken neigt, und dass andererseits gegen Ende des Beschickungsvorgangs des Schmelzofens mit dem Schrott sichergestellt sein muss, dass sich kein Schrott mehr auf der Förderstrecke der Fördereinrichtung befindet, um insbesondere das anschließende Handling des Herausziehens der Fördereinrichtung aus dem Schmelzofen und das Kippen des Schmelzofens zur Entnahme des Metalls zu ermöglichen. Es ist somit wünschenswert, eine Fördereinrichtung derart auszugestalten, dass insbesondere gegen Ende des Beschickungsvorgangs in der Nähe des Schmelzofens sich kein Schrott mehr auf der Fördereinrichtung befindet.

Aus der US 4,083,675 ist eine Anlage bekannt, die grundsätzlich auch zum Einschmelzen von Schrott dienen kann. Die aus der genannten Schrift bekannte Anlage weist eine aus zwei Förderelementen bestehende Fördereinrichtung auf, wobei das der Seite des Schmelzofens zugewandte Förderelement in Form eines schräg angeordneten Fördertrichters bzw. einer Förderrinne ausgebildet ist. Der Bereich des als Förderband ausgebildeten anderen Förderelements ist nicht von einem Schrottvorwärmgehäuse überdeckt. Sobald der Schrott von dem (ersten) Förderelement bzw. dem Förderband auf das andere (zweite) Förderelement bzw. die Förderrinne gelangt, ist die Zuführung des Schrotts in Richtung des Schmelzofens nicht mehr steuerbar, d.h., er ist insbesondere abhängig von der Neigung des (zweiten) Förderelements bzw. der Förderrinne und den Reibungsverhältnissen zwischen der Oberfläche der Förderrinne und dem Schrott.

### Offenbarung der Erfindung

Die erfindungsgemäße Anlage zum Einschmelzen von Schrott und das erfindungsgemäße Verfahren zum Betreiben der Anlage mit den Merkmalen der beiden unabhängigen Ansprüche haben den Vorteil, dass eine gesteuerte Förderung des Schrotts entlang der Förderstrecke auf der Fördereinrichtung in den Schmelzofen insbesondere gegen Ende der Beschickung des Schmelzofens mit dem Schrott ermöglicht wird. Insbesondere wird es durch die erfindungsgemäße Anlage bzw. das erfindungsgemäße Verfahren zum Betreiben der Anlage sichergestellt, dass der Schrott, der sich auf der dem Schmelzofen zugewandten Seite im Bereich der Fördereinrichtung befindet, definiert gefördert und unabhängig von ggf. im Bereich des Eingabebereichs für den Schrott auf der Fördereinrichtung befindlichem Schrott dem Schmelzofen zugeführt wird.

Hinsichtlich der Anlage und dem Verfahren schlägt es die Erfindung hierzu vor, dass die Fördereinrichtung wenigstens zwei Förderelemente aufweist, die die zumindest im Wesentlichen horizontal angeordnete Förderstrecke für den Schrott ausbilden, wobei ein erstes Förderelement vom Eingabebereich in Richtung eines Übergabebereichs zwischen den wenigstens zwei Förderelementen und ein zweites Förderelement vom Übergabebereich bis in den Überführbereich des Schmelzofens reicht, dass die wenigstens zwei Förderelemente zur Förderung des Schrotts unabhängig voneinander antreibbar sind, und dass in dem Übergabebereich für den Schrott von dem ersten Förderelement auf das zweite Förderelement sich die beiden Förderelemente überlappen, wobei im Übergabebereich das erste Förderelement oberhalb des zweiten Förderelements angeordnet ist.

Weiter ist es vorgesehen, dass das zweite Förderelement aus dem Schmelzofen herausgezogen wird oder aber zusammen mit dem Schmelzofen um die Schwenkachse gekippt wird, kann es erforderlich sein, für die benötigte Bewegungsfreiheit des zweiten Förderelements entsprechende Maßnahmen treffen zu müssen. Hierzu schlägt es die Erfindung vor, dass die Förderstrecke im Bereich des ersten Förderelements oberhalb der Förderstrecke des zweiten Förderelements angeordnet ist. Mit anderen Worten gesagt bedeutet dies, dass der Schrott von dem ersten Förderelement bei der Förderung auf das zweite Förderelement herabfällt. Eine derartige Anordnung der beiden Förderelemente bewirkt darüber hinaus eine verbesserte Trennung von ggf. verhaktem Schrott.

Hinsichtlich des erfindungsgemäßen Verfahrens zum Betreiben der Anlage ist es vorgesehen, dass zur Förderung des Schrotts die Fördereinrichtung wenigstens zwei Förderelemente aufweist, die die Förderstrecke für den Schrott ausbilden, wobei ein erstes Förderelement vom Eingabebereich in Richtung eines Übergabebereichs zwischen den wenigstens zwei Förderelementen und ein zweites Förderelement vom Übergabebereich bis in den Überführbereich in den Schmelzofen reicht, und wobei zum Stoppen der Förderung des Schrotts gegen Beschickungsende das erste Förderelement gestoppt und das zweite Förderelement weiterbetrieben wird, bis der auf dem zweiten Förderelement befindliche Schrott vom zweiten Förderelement vollständig in den Schmelzofen gelangt ist.

Sinngemäß wird es somit bei der erfindungsgemäßen Anlage bzw. bei dem erfindungsgemäßen Verfahren zum Betreiben der Anlage vorgeschlagen, in Förderrichtung des Schrotts gesehen zwei unabhängig voneinander antreibbare Förderelemente vorzusehen, wobei das dem Schmelzofen abgewandte erste Förderelement gegen Ende der Beschickung des Schrotts gestoppt wird, um ein Nachfördern von Schrott in Richtung des Schmelzofens sicher zu unterbinden bzw. bei sich ggf. verhaktem Schrott eine Trennung des Schrotts im Übergabebereich zwischen den beiden Förderelementen zu bewirken, und wobei das dem Schmelzofen zugewandte zweite Förderelement nach dem Stoppen des ersten Förderelements aktiv weiterbetrieben wird, und zwar solange, bis sichergestellt ist, dass im Bereich des zweiten Förderelements befindlicher Schrott vollständig in den Schmelzofen gelangt ist.

Vorteilhafte Weiterbildungen der erfindungsgemäßen Anlage zum Einschmelzen von Schrott sind in den Unteransprüchen aufgeführt.

Nach dem Ende des Beschickens des Schmelzofens mit dem Schrott wird dieser üblicherweise im Überführbereich von der Fördereinrichtung in den Schmelzofen im Bereich einer Öffnung des Schmelzofens geschlossen und solange weiter beheizt, bis sichergestellt ist, dass der Schrott im Schmelzofen vollständig geschmolzen bzw. verflüssigt worden ist. Nach dem vollständigen Schmelzen des Schrotts bzw. des Metalls wird das verflüssigte Metall anschließend üblicherweise durch Kippen des Schmelzofens um eine horizontal angeordnete Schwenkachse aus dem Schmelzofen zur Weiterverarbeitung entnommen. Um die angesprochenen Vorgänge bzw. Bewegungen des Schmelzofens durchführen zu können, ist in einer ersten konstruktiven Ausgestaltung zwischen dem Schmelzofen und den beiden Förderelementen der Fördereinrichtung vorgesehen, dass das erste Förderelement in Bezug auf seine (vertikale) Anordnung zum Schmelzofen ortsfest angeordnet ist, und dass das zweite Förderelement in Bezug zum ersten Förderelement beweglich angeordnet ist. Eine derartige Anordnung ermöglicht es insbesondere, dass der Schmelzofen um die horizontal angeordnete Schwenkachse zur Entnahme von verflüssigtem Schrott gekippt werden kann, und dass das zweite Förderelement aus dem Überführbereich des Schmelzofens herausbewegt werden kann. Dabei ist durch die ortsfeste Anordnung des ersten Förderelements eine besonders einfache konstruktive Ausgestaltung des ersten Förderelements insofern möglich, als dass dieses zusätzlich (neben seiner Aufgabe zur Förderung des Schrotts) nicht in andere Richtungen beweglich ausgebildet werden muss, um insbesondere das Kippen des Schmelzofens um die Schwenkachse zu ermöglichen.

Zur Vereinfachung des Kippvorgangs des Schmelzofens zur Entnahme des verflüssigten Schrotts kann es darüber hinaus vorgesehen sein, dass das zweite Förderelement heb- und absenkbar und/oder um eine zweite horizontale Schwenkachse kippbar ist. Dadurch kann das zweite Förderelement sicher aus dem Kippbereich des Schmelzofens bewegt werden.

Es ist jedoch auch eine andere konstruktive Anordnung bzw. Gestaltung des zweiten Förderelements denkbar, bei der der Schmelzofen um die horizontal angeordnete Schwenkachse zur Entnahme von verflüssigtem Schrott kippbar angeordnet ist, wobei das zweite Förderelement starr mit dem Schmelzofen verbunden ist, sodass das zweite Förderelement gemeinsam mit dem Schmelzofen um die Schwenkachse kippbar ist.

Beispielsweise zur Minimierung des Energieverbrauchs des Schmelzofens nach Förderende, d.h. bis zum vollständigen Aufschmelzen des Schrotts in dem Schmelzofen, kann es vorgesehen sein, dass der Überführbereich im Bereich einer Öffnung des Schmelzofens mittels eines dem Schmelzofen zugeordneten Verschlusselements verschließbar ist. Eine derartige Ausgestaltung ist insbesondere dann sinnvoll, wenn durch vorhergehendes Herausziehen bzw. Entfernen des zweiten Förderelements aus dem Bereich des Schmelzofens das entsprechende Verschlusselement die im Schmelzofen ausgebildete Öffnung (in die während der Beschickung des Schrotts das erste Förderelement hineinragt) geschlossen werden kann.

Auch hinsichtlich der konkreten konstruktiven Ausgestaltung der Fördereinrichtung bzw. der Förderelemente gibt es unterschiedlichste konstruktive Möglichkeiten. So ist es grundsätzlich denkbar, die wenigstens zwei Förderelemente in Form von (endlos umlaufenden) Förderbändern auszubilden.

Bevorzugt ist jedoch eine konstruktive Ausgestaltung, bei der die wenigstens zwei Förderelemente jeweils einen Boden mit in und entgegen der Förderrichtung des Schrotts beweglich angeordneten Lamellenelementen aufweist.

Die Förderung des Schrotts auf der Fördereinrichtung wird darüber hinaus optimiert, wenn die Förderebenen der wenigstens zwei Förderelemente gegenüber der Horizontalen um einen Winkel von wenigstens 5°, vorzugsweise zwischen 5° und 15°, schräg angeordnet sind. Eine derartige schräge Anordnung der Fördereinrichtung unterstützt die Bewegung des Schrotts in Förderrichtung durch Schwerkraftwirkung.

Aus Gründen eines minimalen Energieverbrauchs des Schmelzofens ist es von Vorteil, wenn der Querschnitt des Schrottvorwärmgehäuses oberhalb der Fördereinrichtung möglichst vollständig von dem Schrott ausgefüllt ist. Da, wie oben bereits angeführt, Schrott je nach Zusammensetzung bzw. Form ggf. zum Verhaken neigt, kann es hierbei zu einem Aufstauen des Schrotts in einer senkrecht zur Förderrichtung verlaufenden Richtung kommen, die zu einer Blockierung der Fördereinrichtung oder zu einer Beschädigung beispielsweise des Schrottvorwärmgehäuses führen kann. Um diesem Effekt entgegenzuwirken, sieht es eine weitere konstruktiv bevorzugte Ausgestaltung vor, dass sich der Querschnitt des Schrottvorwärmgehäuses vom Eingabebereich in Richtung des Überführbereichs zumindest bereichsweise, vorzugsweise stetig vergrößert, vorzugsweise durch eine Vergrößerung der Höhe des Schrottvorwärmgehäuses oberhalb der Fördereinrichtung. Es wird dadurch in Förderrichtung des Schrotts gesehen ständig mehr Raum bzw. eine sich vergrößernde Querschnittsfläche zur Verfügung gestellt, der von sich ggf. aufstauendem Schrott ausgefüllt werden kann, ohne dass dieser die Fördereinrichtung bzw. das Schrottvorwärmgehäuse mechanisch beansprucht bzw. überlastet.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen vereinfachten Längsschnitt durch eine Anlage zum Einschmelzen von Schrott mit einem Schmelzofen mit daran angeschlossener Schrottvorwärmeinrichtung sowie einer Fördereinrichtung und im Hintergrund erkennbarer Nachverbrennungskammer,
- Fig. 2: einen Ausschnitt aus der Anlage gemäß Fig. 1 bei einem modifizierten, dem Schmelzofen zugewandten Förderelement der Fördereinrichtung,
- Fig. 3: einen Querschnitt im Bereich einer der beiden Förderelemente der Fördereinrichtung der Schrottvorwärmeinrichtung gemäß der Fig. 1 und
- Fig. 4: eine Draufsicht in Richtung des Pfeils IV der Fig. 3 auf die Lamellenelemente aufweisende Fördereinrichtung.

Gleiche Elemente bzw. Elemente mit gleicher Funktion sind in den Figuren mit den gleichen Bezugsziffern versehen.

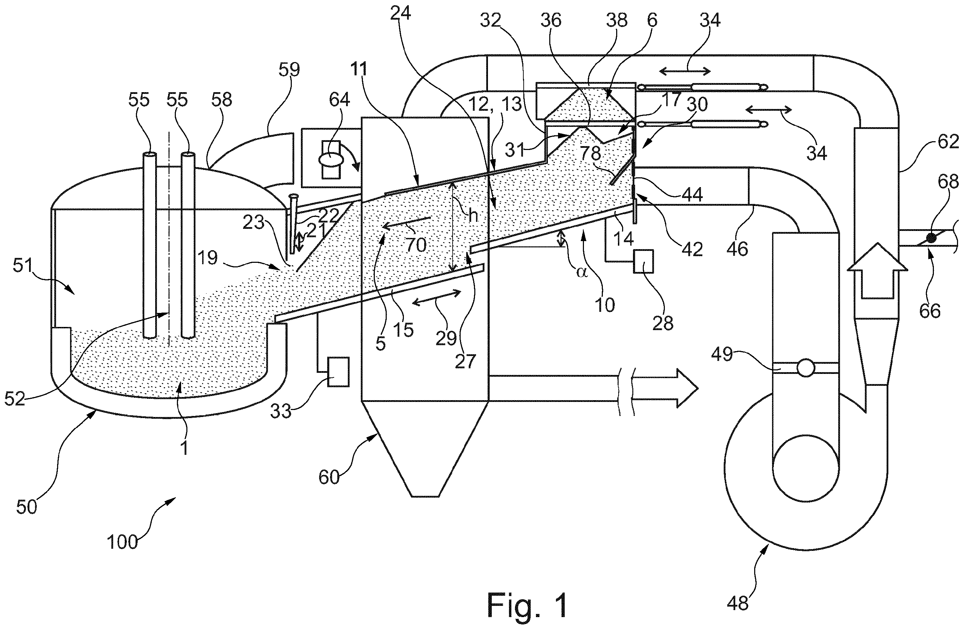

In der Fig. 1 ist eine Anlage 100 zum Herstellen einer aus Metall bestehenden Schmelze 1 in einem Schmelzofen 50 stark vereinfacht dargestellt. Der Schmelzofen 50 weist in an sich bekannter Bauweise einen Innenraum 51 auf und ist um eine erste, horizontal angeordnete Schwenkachse 52, die in der Darstellung der Fig. 1 senkrecht zur Zeichenebene der Fig. 1 verläuft, beweglich angeordnet, um die in dem Innenraum 51 des Schmelzofens 50 erzeugte Schmelze 1 durch Auskippen aus dem Schmelzofen 50 im Bereich eines nicht dargestellten Auslasses des Schmelzofens 50 anschließend weiter zu verarbeiten.

Weiterhin erkennt man zwei der üblicherweise drei selbstverzehrenden, mit einer nicht dargestellten Spannungsquelle verbundene Elektroden 55, 56 zum Erzeugen der zum Verflüssigen des Metalls benötigten Energie. Der Schmelzofen 50 weist darüber hinaus einen domartig ausgebildeten oberen Bereich 58 auf, der über einen Krümmer 59 mit einer Nachverbrennungskammer 60 verbunden ist.

Die Schmelze 1 wird hauptsächlich durch Schrott 5 erzeugt, der mittels einer erfindungsgemäßen Fördereinrichtung 10, die innerhalb einer Schrottvorwärmeinrichtung 11 angeordnet ist, in den Innenraum 51 des Schmelzofens 50 gefördert wird.

Die Schrottvorwärmeinrichtung 11 weist neben der Fördereinrichtung 10 entsprechend einer Zusammenschau der Fig. 1, 3 und 4 ein haubenförmiges Abdeckelement 12 als Bestandteil eines Schrottvorwärmgehäuses 13 auf, das beispielhaft einen rechteckförmigen Querschnitt hat, und das die Fördereinrichtung 10 an deren Oberseite überdeckt. Wie besonders deutlich anhand der Fig. 1 erkennbar ist, ist das Abdeckelement 12 im Wesentlichen geradlinig ausgebildet, wobei sich die lichte Höhe h des Abdeckelements 12 oberhalb der Fördereinrichtung 10 und somit (konstante Breite des Abdeckelements 12 angenommen) auch die Querschnittsfläche des Abdeckelements 12 zwischen einem Eingabebereich 17 für den Schrott 5 in den Bereich des Abdeckelements 12 in Richtung eines Überführbereichs 19 für den Schrott 5 in den Schmelzofen 50 zunimmt.

Weiterhin ist anhand der Fig. 1 erkennbar, dass im Überführbereich 19 eine im Schmelzofen 50 in einer Wand ausgebildete Öffnung 23 vorgesehen, in die während der Förderung des Schrotts 5 in den Schmelzofen 50 die Fördereinrichtung 10 vorzugsweise etwas hineinragt, wobei die Öffnung 23 beispielhaft mittels eines in Richtung des Doppelpfeils 21 beweglich ausgebildeten Verschlussschiebers 22 als Bestandteil einer Verschlussmechanik des Schmelzofens 50 nach dem Beschicken des Innenraums 51 des Schmelzofens 50 zumindest teilweise, vorzugsweise vollständig verschließbar ist.

Anhand der Fig. 1 ist erkennbar, dass die Fördereinrichtung 10 aus zwei Förderelementen 14, 15 ausgebildet ist, wobei die beiden Förderelemente 14, 15 unabhängig voneinander antreibbar sind. Die beiden Förderelemente 14, 15 bilden zusammen eine zumindest im Wesentlichen horizontal angeordnete Förderstrecke 24 aus, entlang derer der Schrott 5 entlang einer Förderrichtung 70 auf der Fördereinrichtung 10 gefördert wird, wobei der Schrott 5 auf den Förderelementen 14, 15 aufliegt. Die beiden, in Förderrichtung 70 einander anschließenden Förderelemente 14, 15 überlappen in einem Übergabebereich 27 zwischen den beiden Förderelementen 14, 15 bereichsweise. Hierzu sind die beiden jeweils im Ausführungsbeispiel eben ausgebildeten Förderelemente 14, 15 auf unterschiedlichem Höhenniveau bzw. parallel zueinander angeordnet, derart, dass das dem Eingabebereich 17 zugewandte erste Förderelement 14 oberhalb des dem Überführbereich 19 zugewandten zweiten Förderelements 15 verläuft. Weiterhin ist erkennbar, dass die beiden Förderelemente 14, 15 der Fördereinrichtung 10 gegenüber der Horizontalen jeweils um einen Winkel α von vorzugsweise zwischen 5° und 15° geneigt angeordnet sind. Im Ausführungsbeispiel ist die Neigung der beiden Förderelemente 14, 15 identisch ausgebildet, sie kann jedoch auch unterschiedlich groß sein.

Während das erste Förderelement 14 ortsfest angeordnet ist, ist das zweite Förderelement 15 in Bezug zum ersten Förderelement 15 beweglich angeordnet. Bei dem in der Fig. 1 dargestellten Ausführungsbeispiel ist das zweite Förderelement 15 in Richtung des Doppelpfeils 29 in Richtung seiner Längserstreckung beweglich angeordnet, derart, dass das zweite Förderelement 15 in der in der Fig. 1 dargestellten Förderstellung etwas in die Öffnung 23 des Schmelzofens 50 hineinragt, um sicherzustellen, dass kein Schrott 5 aus dem Schmelzofen 50 herausfällt. Nach dem Ende der Beschickung des Innenraums 51 des Schmelzofens 50 ist das zweite Förderelement 15 aus der Öffnung 23 herausziehbar, um ein Verschließen der Öffnung 23 durch den Verschlussschieber 22 der Verschlussmechanik und ein Kippen des Schmelzofens 50 um die erste Schwenkachse 52 zu ermöglichen.

Beispielhaft weisen die beiden Förderelemente 14, 15 separate Antriebe 28 und 33 auf. Dadurch ist eine unabhängige Förderung des Schrotts 5 auf den beiden Förderelementen 14, 15 in Förderrichtung 70 möglich.

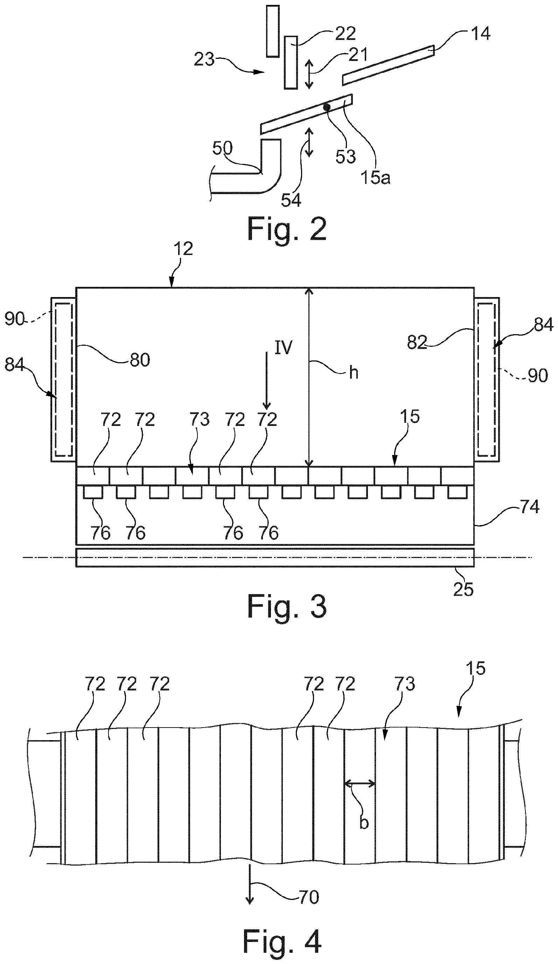

Bei dem in der Fig. 2 dargestellten Ausführungsbeispiel ist hingegen das zweite Förderelement 15a zusätzlich um eine zweite, horizontal angeordnete Schwenkachse 53 und ggf. in Richtung des Doppelpfeils 54 zusätzlich heb- und absenkbar angeordnet, sodass durch ein Bewegen des zweiten Förderelements 15a um die zweite Schwenkachse 53 und ggf. eine vertikale Bewegung ein Verschließen der Öffnung 23 durch das Verschlusselement 22 ermöglicht wird.

In einer weiteren, in den Figuren nicht dargestellten Ausführungsform des zweiten Förderelements 15 ist dieses (starr) mit dem Schmelzofen 50 verbunden, sodass das Verschlusselement 22 bis zum zweiten Förderelement 15 zum Verschließen der Öffnung 23 beweglich ausgebildet ist und der Schmelzofen 50 zur Entnahme der Schmelze 1 zusammen mit dem zweiten Förderelement 15 um die erste Schwenkachse 52 bewegt wird.

Der Eingabebereich 17 des Schrotts 5 in die Schrottvorwärmeinrichtung 11 ist auf der dem Überführbereich 19 gegenüberliegenden Seite an einem stirnseitigen Endbereich 30 des Abdeckelements 12 an dessen Oberseite 31 angeordnet und weist einen senkrecht nach oben ragenden Zuführschacht 32 auf, der mittels zweier, übereinander und parallel zueinander angeordneter, jeweils in Richtung des Doppelpfeils 34 unabhängig voneinander bewegbarer, als Schleusen- bzw. Sperrelemente dienenden Querschiebern 36, 38 verschließbar ist.

In der Fig. 1 erkennt man, dass zwischen den beiden Querschiebern 36, 38 eine bestimmte Menge 6 an Schrott 5 angeordnet ist, die durch Freigeben durch den unteren Querschieber 36 aus der in der Fig. 1 dargestellten Position über den Zuführschacht 32 in den Bereich des Abdeckelements 12 bzw. der Fördereinrichtung 10 gelangt.

Ergänzend wird erwähnt, dass anstelle zweier Querschieber 36, 38 auch anders ausgebildete Einrichtungen zum Zuführen von Schrott 5 in den Bereich des Abdeckelements 12 bzw. auf das erste Förderelement 14 der Fördereinrichtung 10 vorgesehen sein können, beispielsweise Kombinationen aus Förderbändern mit Förderschnecken oder Ähnlichem. Wesentlich für die Ausbildung einer derartigen Zuführeinrichtung ist lediglich, dass der Zuführschacht 32 bzw. das Abdeckelement 12 gegenüber dem Zutritt von Umgebungsluft während des Zuführens von Schrott 5 in das Abdeckelement 12 möglichst gut abdichtet ausgebildet ist.

An den dem Überführbereich 19 gegenüberliegenden stirnseitigen Endbereich 30 des Abdeckelements 12 ist ein Ansaugbereich 42 angeordnet, der beispielhaft durch ein luftdurchlässiges Element, wie ein Lochblech 44, in Wirkverbindung mit dem Querschnitt des Abdeckelements 12 angeordnet ist.

Die Anordnung des Ansaugbereichs 42 ist derart, dass dieser zumindest teilweise, vorzugsweise überwiegend, besonders bevorzugt vollständig in Überdeckung mit dem innerhalb des Abdeckelements 12 auf der Fördereinrichtung 10 geförderten Schrotts 5 angeordnet ist bzw. auf den Querschnitt des Schrotts 5 in einer senkrecht zur Förderrichtung 70 des Schrotts 5 innerhalb des Abdeckelements 12 wirkt. Hierzu geht das Lochblech 44 bzw. der Ansaugbereich 42 von der Höhe des Bodenbereichs bzw. der Förderebene der Fördereinrichtung 10 aus, und reicht bis zu dem Bereich, von dem sich der Zuführschacht 32 von dem Abdeckelement 12 nach oben erstreckt. Im Idealfall weist der Ansaugbereich 42 daher im Endbereich 30 eine Höhe auf, die der Höhe h des Abdeckelements 12 im Endbereich 30 entspricht.

Der Ansaugbereich 42 ist über einen Ansaugkrümmer 46 mit einer Absaugeinrichtung 48 verbunden. In dem Ansaugkrümmer 46 ist darüber hinaus eine verstellbare Klappe 49 angeordnet, um die aus dem Innenraum 51 des Schmelzofens 50 über den Querschnitt des Abdeckelements 12 von der Absaugeinrichtung 48 angesaugte Menge an heißen Abgasen einzustellen. Von der Absaugeinrichtung 48 gelangen darüber hinaus die abgesaugten Abgase über einen Zuführkrümmer 62 in die Nachverbrennungskammer 60, wobei im Krümmer 59 beispielhaft eine verstellbare Klappe 64 angeordnet ist, sodass das Mischungsverhältnis zwischen den unmittelbar aus dem Schmelzofen 50 über den Krümmer 59 in den Bereich der Nachverbrennungskammer 60 eintretenden Abgase und der über die Absaugeinrichtung 48 und den Zuführkrümmer 62 in den Bereich der Nachverbrennungskammer 60 eintretenden Abgase einstellbar ist.

Weiterhin kann es optional vorgesehen sein, dass über eine Frischluftansaugung 66 mit verstellbarer Klappe 68 im Bereich des Zuführkrümmers 62 Außenluft zur Temperierung der in der Nachverbrennungskammer 60 mittels nicht dargestellter Heizmittel auf eine Temperatur zwischen 700° bis 800° erwärmten Abgase zuführbar ist.

Die beiden neben der Nachverbrennungskammer 60 angeordneten Förderelemente 14, 15 der Fördereinrichtung 10 weisen, wie insbesondere anhand der Zusammenschau der Fig. 3 und 4 erkennbar ist, eine Vielzahl von parallel zueinander und in Längsrichtung bzw. in Förderrichtung 70 des Schrotts 5 angeordneter Lamellenelemente 72 aus verschleißfestem Stahl zur Bildung eines Bodens 73 auf. Beispielhaft sind zwölf Lamellenelemente 72 dargestellt. Die Lamellenelemente 72 bilden einen Schubboden aus und erstrecken sich über die gesamte Länge des jeweiligen Förderelements 14, 15, wobei die Lamellenelemente 72 beispielhaft jeweils eine gleiche Breite b von beispielsweise zwischen 10cm und 30cm aufweisen. Jeweils mehrere der Lamellenelemente 72 sind mittels der Antriebe 28 bzw. 33 gleichzeitig synchron bewegbar. Das Förderprinzip des Schrotts 5 mittels der Lamellenelemente 72 wird wie folgt erläutert: Beispielhaft wird davon ausgegangen, dass zwölf Lamellenelemente 72 nebeneinander angeordnet sind. Zunächst werden das erste, vierte, siebte und zehnte Lamellenelement 72 um eine Distanz von beispielsweise 30cm entgegen der Förderrichtung 70 zurückgezogen. Dann werden das zweite, fünfte, achte und elfte Lamellenelement 72 ebenfalls um dieselbe Distanz (30cm) zurückgezogen. Anschließend werden das dritte, sechste, neunte und zwölfte Lamellenelement 72 ebenfalls um die Distanz (30cm) zurückgezogen. Jetzt erfolgt der Fördervorgang des Schrotts 5, indem alle zwölf Lamellenelemente 72 gleichzeitig um die gleiche Distanz (30cm) in Förderrichtung 70 vorgeschoben werden.

Anhand der Fig. 3 ist darüber hinaus erkennbar, dass die Lamellenelemente 72 unterhalb des Abdeckelements 12 von einem Gehäuse 74 umgeben sind, um einerseits das Austreten von heißen Abgasen aus dem Abdeckelement 12 über die Lamellenelemente 72 an die äußere Umgebung zu vermeiden, und um andererseits den Zutritt von Luft aus der äußeren Umgebung über die Lamellenelemente 72 in den Bereich des Abdeckelements 12 ebenfalls zu vermeiden. Weiterhin ist anhand der Fig. 3 erkennbar, dass die aus hitzebeständigem Stahl bestehenden Lamellenelemente 72 auf der dem Abdeckelement 12 abgewandten Unterseite jeweils mit Kühleinrichtungen 76 verbunden sind, die beispielsweise in der Fig. 2 nicht erkennbare, mit Kühlwasser durchströmbare Kühlkanäle aufweisen.

Zur Unterstützung der Förderung des Schrotts 5 von dem Eingabebereich 17 in Richtung des Überführbereichs 19 kann darüber hinaus ein beweglich angeordneter Schieber 78 vorgesehen sein, der den Schrott 5 in Richtung des Schmelzofens 50 drückt.

Weiterhin ist anhand der Fig. 3 optional die Möglichkeit dargestellt, dass das Abdeckelement 12 im Bereich seiner beiden gegenüberliegenden Seitenwände 80, 82 über entsprechend ausgestaltete Ansaugbereiche 84 ebenfalls in Wirkverbindung mit der Absaugeinrichtung 48 angeordnet sein kann. Im Bereich der Ansaugbereiche 84 sind die Seitenwände 80, 82 luftdurchlässig, beispielsweise mit Lochblechen, ausgebildet. Wesentlich dabei ist, dass die Ansaugbereiche 84 zumindest im Wesentlichen ebenfalls über die gesamte Höhe h des Abdeckelements 12 bzw. der Höhe des in dem Abdeckelements 12 geförderten Schrotts 5 angeordnet sind, wobei die Ansaugbereiche 84 vorzugsweise ebenfalls im Bereich des Eingabebereichs 17 für den Schrott 5 in dem Abdeckelement 12 angeordnet sind.

Weiterhin ist anhand der Fig. 1 auch erkennbar, dass während des Zuführens des Schrotts 5 in den Schmelzofen 50 zumindest nahezu der gesamte Querschnitt des Abdeckelements 12 oberhalb der beiden Förderelemente 14, 15 der Fördereinrichtung 10 mit dem Schrott 5 befüllt ist, sodass die über die Absaugeinrichtung 48 aus dem Bereich des Schmelzofens 50 angesaugten heißen Abgase ebenfalls über den gesamten Querschnitt des Schrotts 5 in dem Abdeckelement 12 auf den Schrott 5 wirken können.

Während zumindest der größten Zeit des Beschickens des Innenraums 51 des Schmelzofens 50 mit dem Schrott 5 werden die beiden Förderelemente 14, 15 der Fördereinrichtung 10 durch deren separate Antriebe 28 und 33 synchron bzw. mit der gleichen Fördergeschwindigkeit angetrieben. Alternativ kann es auch vorgesehen sein, dass das zweite Förderelement 15 mit einer größeren Fördergeschwindigkeit angetrieben wird wie das erste Förderelement 14. Dadurch kann ggf. eine Trennung von verhaktem Schrott 5 im Übergabebereich 27 zwischen den beiden Förderelementen 14, 15 begünstigt werden.

Gegen Ende des Beschickungsvorgangs, d.h. Wenn der Innenraum 51 nahezu mit der Sollmenge an Schrott 5 gefüllt ist, wird die Förderung des Schrotts 5 durch das erste Förderelement 14 gestoppt, sodass kein Schrott 5 mehr von dem ersten Förderelement 14 auf das zweite Förderelement 15, 15a gefördert wird. Jedoch findet weiterhin eine Förderung des Schrotts 5 durch das zweite Förderelement 15, 15a statt, und zwar solange, bis sichergestellt ist, dass sich kein Schrott 5 mehr auf dem zweiten Förderelement 15, 15a befindet bzw. der Schrott 5 vollständig in den Schmelzofen 50 gefördert wurde.

Die soweit beschriebene Anlage 100 kann in vielfältiger Art und Weise abgewandelt bzw. modifiziert werden, ohne vom Erfindungsgedanken abzuweichen.

### Bezugszeichenliste

- 1: Schmelze
- 5: Schrott
- 6: Menge
- 10: Fördereinrichtung
- 11: Schrottvorwärmeinrichtung
- 12: Abdeckelement
- 13: Schrottvorwärmgehäuse
- 14: Förderelement
- 15: Förderelement
- 17: Eingabebereich
- 19: Überführbereich
- 21: Doppelpfeil
- 22: Verschlussschieber
- 23: Öffnung
- 24: Förderstrecke
- 27: Übergabebereich
- 28: Antrieb
- 29: Doppelpfeil
- 30: Endbereich
- 31: Oberseite
- 32: Zuführschacht
- 33: Antrieb
- 34: Doppelpfeil
- 36,38: Querschieber
- 42: Ansaugbereich
- 44: Lochblech
- 46: Ansaugkrümmer
- 48: Absaugeinrichtung
- 49: Klappe
- 50: Schmelzofen
- 51: Innenraum
- 52,53: Schwenkachse
- 54: Doppelpfeil
- 55,56: Elektrode
- 58: Bereich
- 59: Krümmer
- 60: Nachverbrennungskammer
- 62: Zuführkrümmer
- 64: Klappe
- 66: Frischluftansaugung
- 68: Klappe
- 70: Förderrichtung
- 72: Lamellenelement
- 74: Gehäuse
- 76: Kühleinrichtung
- 78: Schieber
- 80, 82: Seitenwand
- 84: Ansaugbereich

- 100: Anlage

- h: Höhe
- b: Breite
- α: Winkel

## Patentansprüche

1. Verfahren zum Einschmelzen von Schrott (5), bei dem mittels einer Fördereinrichtung (10) der Schrott (5) zwischen einem Eingabebereich (17) für den Schrott (5) auf die Fördereinrichtung (10) und einem Überführbereich (19) für den Schrott (5) von der Fördereinrichtung (10) in einen Schmelzofen (50) gefördert wird, wobei die Fördereinrichtung (10) zumindest zwischen dem Eingabebereich (17) und dem Überführbereich (19) in einem einen zumindest im Wesentlichen geschlossenen Querschnitt aufweisenden Schrottvorwärmgehäuse (13) angeordnet oder von einem Schrottvorwärmgehäuse (13) überdeckt ist, wobei gegen Ende eines Befüllvorgangs des Schmelzofens (50) mit dem Schrott (5) die Förderung von Schrott (5) in den Schmelzofen (50) gestoppt wird, wobei zur Förderung des Schrotts (5) in den Schmelzofen (50) die Fördereinrichtung (10) wenigstens zwei Förderelemente (14; 15; 15a) aufweist, die eine zumindest im Wesentlichen horizontal verlaufende Förderstrecke (24) für den Schrott (5) ausbilden, und wobei ein erstes Förderelement (14) vom Eingabebereich (17) in Richtung eines Übergabebereichs (27) zwischen den wenigstens zwei Förderelementen (14, 15; 15a) und ein zweites Förderelement (15; 15a) vom Übergabebereich (27) bis in den Überführbereich (19) reicht,
**dadurch gekennzeichnet,**
**dass** zum Stoppen der Förderung des Schrotts (5) in den Schmelzofen (50) gegen Beschickungsende das erste Förderelement (14) gestoppt und das zweite Förderelement (15; 15a) weiterbetrieben wird, bis der auf dem zweiten Förderelement (15; 15a) befindliche Schrott (5) vom zweiten Förderelement (15; 15a) vollständig in den Schmelzofen (50) gelangt ist.

2. Verfahren nach Anspruch 1,
**dadurch gekennzeichnet,**
**dass** die wenigstens zwei Förderelemente (14, 15; 15a) vor dem Beschickungsende derart angetrieben werden, dass das erste Förderelement (14) eine geringere Fördergeschwindigkeit für den Schrott (5) aufweist als das zweite Förderelement (15; 15a).

3. Anlage (100) zum Einschmelzen von Schrott (5) zum Betreiben nach Anspruch 1 oder 2, mit einem Schmelzofen (50), mit einer Fördereinrichtung (10) zum Zuführen des Schrotts (5) zwischen einem Eingabebereich (17) für den Schrott (5) auf die Fördereinrichtung (10) und einem Überführbereich (19) für den Schrott (5) von der Fördereinrichtung (10) in den Schmelzofen (50), wobei die Fördereinrichtung (10) zumindest zwischen dem Eingabebereich (17) und dem Überführbereich (19) in einem Schrottvorwärmgehäuse (13) angeordnet oder von einem Schrottvorwärmgehäuse (13) auf einer Förderstrecke (24) für den Schrott (5) überdeckt ist, wobei die Fördereinrichtung (10) wenigstens zwei Förderelemente (14, 15; 15a) aufweist, die die zumindest im Wesentlichen horizontal verlaufende Förderstrecke (24) für den Schrott (5) ausbilden, auf der der Schrott (5) aufliegt, wobei ein erstes Förderelement (14) vom Eingabebereich (17) in Richtung eines Übergabebereichs (27) zwischen den wenigstens zwei Förderelementen (14, 15; 15a) und ein zweites Förderelement (15) vom Übergabebereich (27) bis in den Überführbereich (19) reicht, dass die wenigstens zwei Förderelemente (14, 15; 15a) zur Förderung des Schrotts (5) unabhängig voneinander antreibbar sind, wobei in dem Übergabebereich (27) für den Schrott (5) von dem ersten Förderelement (14) auf das zweite Förderelement (15; 15a) sich die beiden Förderelemente (14, 15; 15a) überlappen, wobei im Übergabebereich (27) das erste Förderelement (14) oberhalb des zweiten Förderelements (15; 15a) angeordnet ist, wobei das erste Förderelement (14) ortsfest angeordnet ist, und wobei das zweite Förderelement (15; 15a) in Bezug zum ersten Förderelement (14) beweglich angeordnet ist,
**dadurch gekennzeichnet,**
**dass** der Schmelzofen (50) um eine horizontal angeordnete erste Schwenkachse (52) zur Entnahme von verflüssigtem Schrott (5) kippbar angeordnet ist, und dass das zweite Förderelement (15) starr mit dem Schmelzofen (50) verbunden ist, so dass das zweite Förderelement (15) zusammen mit dem Schmelzofen (50) um die erste Schwenkachse (52) kippbar ist.

4. Anlage nach Anspruch 3,
**dadurch gekennzeichnet,**
**dass** eine im Überführbereich (19) am Schmelzofen (50) ausgebildete Öffnung (23) mittels eines dem Schmelzofen (50) zugeordneten Verschlusselements (22) verschließbar ist.

5. Anlage nach Anspruch 3 oder 4
**dadurch gekennzeichnet,**
**dass** die wenigstens zwei Förderelemente (14, 15; 15a) als Förderbander ausgebildet sind.

6. Anlage nach einem der Ansprüche 3 bis 5,
**dadurch gekennzeichnet,**
**dass** die wenigstens zwei Förderelemente (14, 15; 15a) jeweils einen Boden (73) mit in und entgegen der Förderrichtung (70) des Schrotts (5) beweglich angeordneten Lamellenelementen (72) aufweisen.

7. Anlage nach einem der Ansprüche 3 bis 6,
**dadurch gekennzeichnet,**
**dass** die wenigstens zwei Förderelemente (14, 15; 15a) gegenüber der Horizontalen um einen Winkel (α) von wenigstens 5°, vorzugsweise zwischen 5°und 15°, schräg angeordnet sind, derart, dass die Förderstrecke (24) in Richtung des Schmelzofens (50) abfällt.

8. Anlage nach einem der Ansprüche 3 bis 7,
**dadurch gekennzeichnet,**
**dass** sich der Querschnitt des Schrottvorwärmgehäuses (13) vom Eingabebereich (17) in Richtung des Überführbereichs (19) zumindest bereichsweise, vorzugsweise stetig vergrößert, vorzugsweise durch eine Vergrößerung der Höhe (h) des Schrottvorwärmgehäuses (13) oberhalb der Fördereinrichtung (10).

## Claims

1. A method for melting down scrap (5) in which the scrap (5) is conveyed by means of a conveyor device (10) between an input area (17) for the scrap (5) onto the conveyor device (10) and a transfer area (19) for the scrap (5) from the conveyor device (10) into a melting furnace (50), the conveyor device (10), at least between the input area (17) and the transfer area (19), being disposed in a scrap preheating housing (13) which has an at least substantially closed cross section or being covered by a scrap preheating housing (13), the transport of scrap (5) into the melting furnace (50) being stopped towards the end of a feed process of the melting furnace (50) with the scrap (5), the conveyor device (10) having at least two conveyor elements (14, 15; 15a) for conveying the scrap (5) into the melting furnace (50), the at least two conveyor elements (14, 15; 15a) forming an at least substantially horizontal conveyor path (24) for the scrap (5), and a first conveyor element (14) extending from the input area (17) in the direction of a delivery area (27) between the at least two conveyor elements (14,15; 15a) and a second conveyor element (15; 15a) extending from the delivery area (27) into the transfer area (19),
**characterized in that**
the first conveyor element (14) is stopped towards the end of the feed process in order to stop the transport of the scrap (5) into the melting furnace (50) and the second conveyor element (15; 15a) is further operated until the entire scrap (5) located on the second conveyor element (15; 15a) is transported from the second conveyor element (15; 15a) into the melting furnace (50).

2. The method according to claim 1,
**characterized in that**
the at least two conveyor elements (14, 15; 15a) are driven before the end of the feed process in such a manner that the first conveyor element (14) has a lower conveyor speed for the scrap (5) than the second conveyor element (15; 15a).

3. A system (100) for melting down scrap (5) to be operated according to claim 1 or 2, the system (100) comprising a melting furnace (50) and a conveyor device (10) for supplying the scrap (5) between an input area (17) for inputting the scrap (5) onto the conveyor device (10) and a transfer area (19) for transferring the scrap (5) from the conveyor device (10) into the melting furnace (50), the conveyor device (10) being disposed in a scrap preheating housing (13), at least between the input area (17) and the transfer area (19), or being covered by a scrap preheating housing (13) on a conveyor path (24) for the scrap (5), the conveyor device (10) having at least two conveyor elements (14, 15; 15a) forming the at least substantially horizontal conveyor path (24) for the scrap (5) on which the scrap (5) lies, a first conveyor element (14) extending from the input area (17) in the direction of a delivery area (27) between the at least two conveyor elements (14, 15; 15a) and a second conveyor element (15) extending from the delivery area (27) into the transfer area (19), in that the at least two conveyor elements (14, 15; 15a) can be driven independently of one another in order to convey the scrap (5), the two conveyor elements (14, 15; 15a) overlapping in the delivery area (27) for the scrap (5) from the first conveyor element (14) onto the second conveyor element (15; 15a), the first conveyor element (14) being disposed above the second conveyor element (15; 15a) in the delivery area (27), the first conveyor element (14) being disposed in a stationary manner and the second conveyor element (15; 15a) being disposed so as to be movable in relation to the first conveyor element (14).
**characterized in that**
the melting furnace (50) is disposed so as to be tiltable around a horizontal first pivot axis (52) in order to remove liquefied scrap (5), and **in that** the second conveyor element (15) is rigidly connected to the melting furnace (50), the second conveyor element (15) and the melting furnace (50) thus being tiltable around the first pivot axis (52).

4. The system according to claim 3,
**characterized in that**
an opening (23) realized in the transfer area (19) on the melting furnace (50) can be closed by means of a closure element (22) which is assigned to the melting furnace (50).

5. The system according to claim 3 or 4,
**characterized in that**
the at least two conveyor elements (14, 15; 15a) are realized as conveyor belts.

6. The system according to any one of claims 3 to 5,
**characterized in that**
the at least two conveyor elements (14, 15; 15a) each have a bottom (73) which has lamella elements (72) which are disposed so as to be movable in the conveyor direction (70) of the scrap (5) or in the opposite direction of the conveyor direction (70) of the scrap (5).

7. The system according to any one of claims 3 to 6,
**characterized in that**
the at least two conveyor elements (14, 15; 15a) are disposed at an inclined angle (α) of at least 5°, preferably between 5° and 15°, in relation to the horizontal in such a manner that the conveyor path (24) slopes in the direction of the melting furnace (50).

8. The system according to any one of claims 3 to 7,
**characterized in that**
the cross section of the scrap preheating housing (13) increases at least partially, preferably steadily, from the input area (17) towards the transfer area (19), preferably by increasing the height (h) of the scrap preheating housing (13) above the conveyor device (10).

## Revendications

1. Procédé servant à faire fondre de la ferraille (5) dans lequel la ferraille (5) est transportée moyennant un dispositif de transport (10) entre une zone d'entrée (17) pour la ferraille (5) sur le dispositif de transport (10) et une zone de transfert (19) pour la ferraille (5) du dispositif de transport (10) dans un four de fusion (50), ledit dispositif de transport (10), au moins entre la zone d'entrée (17) et la zone de transfert (19), étant disposé dans un boîtier de préchauffage de la ferraille (13) qui présente une section transversale qui est au moins essentiellement fermée ou étant couvert par un boîtier de préchauffage de la ferraille (13), le transport de la ferraille (5) dans le four de fusion (50) étant arrêté vers la fin d'un processus d'alimentation du four de fusion (50) avec la ferraille (5), ledit dispositif de transport (10) présentant au moins deux éléments de transport (14, 15; 15a) pour transporter la ferraille (5) dans le four de fusion (50), lesdits au moins deux éléments de transport (14, 15; 15a) formant un chemin de transport (24) pour la ferraille (5) qui est au moins essentiellement horizontal, et un premier élément de transport (14) s'étendant de la zone d'entrée (17) dans la direction d'une zone de transmission (27) entre les au moins deux éléments de transport (14, 15; 15a) et un deuxième élément de transport (15; 15a) s'étendant de la zone de transmission (27) dans la zone de transfert (19),
**caractérisé en ce que**
le premier élément de transport (14) est arrêté vers la fin du processus d'alimentation pour arrêter le transport de la ferraille (5) dans le four de fusion (50) et l'opération du deuxième élément de transport (15; 15a) est continuée jusqu'à ce que toute la ferraille (5) située sur le deuxième élément de transport (15; 15a) est transportée du deuxième élément de transport (15; 15a) dans le four de fusion (50).

2. Procédé selon la revendication 1,
**caractérisé en ce que**
les au moins deux éléments de transport (14, 15; 15a) sont entraînés avant la fin du processus d'alimentation de telle manière que le premier élément de transport (14) a une vitesse de transport pour la ferraille (5) inférieure au deuxième élément de transport (15; 15a).

3. Installation (100) servant à faire fondre de la ferraille (5) et à être opérée selon la revendication 1 ou 2, ladite installation (100) comportant un four de fusion (50) et un dispositif de transport (10) pour alimenter la ferraille (5) entre une zone d'entrée (17) pour placer la ferraille (5) sur le dispositif de transport (10) et une zone de transfert (19) pour transférer la ferraille (5) du dispositif de transport (10) dans le four de fusion (50), ledit dispositif de transport (10), au moins entre la zone d'entrée (17) et la zone de transfert (19), étant disposé dans un boîtier de préchauffage de la ferraille (13) ou étant couvert par un boîtier de préchauffage de la ferraille (13) sur un chemin de transport (24) pour la ferraille (5), ledit dispositif de transport (10) présentant au moins deux éléments de transport (14, 15; 15a) qui forment le chemin de transport (24) pour la ferraille (5) qui est au moins essentiellement horizontal et sur lequel la ferraille (5) est placée, un premier élément de transport (14) s'étendant de la zone d'entrée (17) dans la direction d'une zone de transmission (27) entre les au moins deux éléments de transport (14, 15; 15a) et un deuxième élément de transport (15; 15a) s'étendant de la zone de transmission (27) dans la zone de transfert (19), lesdits au moins deux éléments de transport (14, 15; 15a) pouvant être entraînés indépendamment l'un de l'autre pour transporter la ferraille (5), les deux éléments de transport (14, 15; 15a) se chevauchant dans ladite zone de transmission (27) pour la ferraille (5) du premier élément de transport (14) sur le deuxième élément de transport (15; 15a), ledit premier élément de transport (14) étant disposé au-dessus du deuxième élément de transport (15; 15a) dans la zone de transmission (27), ledit premier élément de transport (14) étant disposé de façon fixe, et ledit deuxième élément de transport (15; 15a) étant disposé de façon à être mobile par rapport au premier élément de transport (14),
**caractérisée en ce que**
le four de fusion (50) est disposé de façon à être basculable autour d'un premier axe de pivotement (52) horizontal pour prélever de la ferraille (5) liquéfiée et **en ce que** le deuxième élément de transport (15) est relié au four de fusion (50) rigidement, de sorte que le deuxième élément de transport (15) et le four de fusion (50) sont basculables autour du premier axe de pivotement (52).

4. Installation selon la revendication 3,
**caractérisée en ce**
**qu'**une ouverture (23) réalisée dans la zone de transfert (19) sur le four de fusion (50) peut être fermée moyennant un élément de fermeture (22) qui est associé au four de fusion (50).

5. Installation selon la revendication 3 ou 4,
**caractérisée en ce que**
les au moins deux éléments de transport (14, 15; 15a) sont réalisés comme bandes transporteuses.

6. Installation selon l'une quelconque des revendications 3 à 5,
**caractérisée en ce que**
chacun des au moins deux éléments de transport (14, 15; 15a) présente un fond (73) qui a des éléments à lamelles (72) qui sont disposés de façon à être mobiles dans la direction de transport (70) de la ferraille (5) ou contre la direction de transport (70) de la ferraille (5).

7. Installation selon l'une quelconque des revendications 3 à 6,
**caractérisée en ce que**
les au moins deux éléments de transport (14, 15; 15a) sont disposés en biais à un angle (α) d'au moins 5°, de préférence entre 5° et 15°, par rapport à l'horizontale, de telle manière que le chemin de transport (24) chute dans la direction du four de fusion (50).

8. Installation selon l'une quelconque des revendications 3 à 7,
**caractérisée en ce que**
la section transversale du boîtier de préchauffage de la ferraille (13) s'agrandit au moins en partie, de préférence régulièrement, à partir de la zone d'entrée (17) dans la direction de la zone de transfert (19), de préférence en agrandissant la hauteur (h) du boîtier de préchauffage de la ferraille (13) au-dessus du dispositif de transport (10).
